# EUROPÄISCHE PATENTANMELDUNG

(11) **EP 2 309 623 A2**
(43) Veröffentlichungstag der Anmeldung: **13.04.2011**
(21) Anmeldenummer: 10405185.9
(22) Anmeldetag: 04.10.2010
(51) Int. Cl.: H02K 11/00, E06B 9/68

(54) **Elektrische Antriebsvorrichtung für eine Store**

(30) Priorität: 06.10.2009 CH 15412009
(71) Anmelder: Griesser Holding AG, 8355 Aadorf (CH)
(72) Erfinder: Walther, René, 9597 Landschlacht (CH)
(74) Vertreter: Gachnang, Hans Rudolf

(57) **Zusammenfassung**

Die Antriebsvorrichtung (1) ist modular aufgebaut. Die Motorelektronik zum Ansteuern des Elektromotors ist in einem eigenen Antriebsmodul (15) untergebracht, welches mit dem Motormodul (3) wieder lösbar verbunden ist. Die Steuerelektronik (27) ist in einem separaten Funktionsmodul (25) untergebracht. Der Funktionsumfang des Funktionsmoduls (25) kann durch Zusatzmodule, beispielsweise durch ein Sensormodul (31) oder durch ein Kommunikationsmodul (35) erweitert werden.

Die Antriebsvorrichtung ermöglicht ein einfaches und flexibles Um- oder Nachrüsten von Storen.

## Beschreibung

Gegenstand der Erfindung ist eine elektrische Antriebsvorrichtung für eine Store gemäss dem Oberbegriff des Patentanspruchs 1.

Der Antrieb von Storen wie z.B. Rafflamellenstoren kann in bekannter Weise manuell mittels einer Handkurbel oder alternativ mittels Elektromotoren erfolgen. Insbesondere bei Storen, Jalousien oder Rollladen, die im Aussenbereich eingesetzt werden, umfassen die elektrischen Antriebe in der Regel Wechselstrommotoren, welche für den Betrieb mit 230V Niederspannung ausgebildet sind. Diese Storenmotoren werden von elektronischen Steuerungen kontrolliert, bei denen ein Energieteil und ein Steuerungsteil in einem gemeinsamen Gehäuse eingebaut sind. Der Energieteil umfasst eine Kleinspannungsversorgung für die Steuerelektronik und Stellglieder zum Ansteuern der Storenmotoren. Der Steuerungsteil umfasst die Steuerelektronik, welche die zum Betrieb der Storen erforderlichen Funktionen ausführt. Bei derartigen Anordnungen sind nachträgliche Änderungen wie z.B. eine Anpassung, Änderung oder Ergänzung von Storenfunktionen oder eine Umrüstung des Antriebssystems auf Solar- oder Batteriebetrieb nicht oder nur in beschränktem Umfang möglich.

Eine Aufgabe der vorliegenden Erfindung ist es deshalb, eine einfach an unterschiedliche Bedürfnisse anpassbare elektrische Antriebsvorrichtung für Storen zu schaffen.

Diese Aufgabe wird gelöst durch eine elektrische Antriebsvorrichtung für eine Store gemäss den Merkmalen des Patentanspruchs 1. Vorteilhafte Ausgestaltungen dieser Antriebsvorrichtung sind in den Unteransprüchen angegeben.

Die erfindungsgemässe Antriebsvorrichtung ist modular aufgebaut und umfasst ein von der Motoreinheit getrenntes Antriebsmodul mit der Motorelektronik. Ein Funktionsmodul umfasst die Steuerungselektronik. Das Funktionsmodul kann durch Zusatzmodule wie z.B. ein Sensormodul zum Anschliessen lokaler Sensoren oder ein Kommunikationsmodul zum Ankoppeln an ein Bussystem entsprechend der jeweiligen Bedürfnisse jederzeit erweitert werden. Alle Module sind mittels einfach zu bedienender mechanischer Verbindungsmittel und mittels vorzugsweise standardisierter Steckverbindungen mechanisch und elektrisch wieder lösbar miteinander verbindbar. Dies ermöglicht jederzeit eine kostengünstige und einfache Nach- oder Umrüstung der Antriebsvorrichtung. Die Module sind so ausgebildet, dass eine Abtriebswelle der Store auf beiden Seiten an die Antriebswelle angekoppelt werden kann.

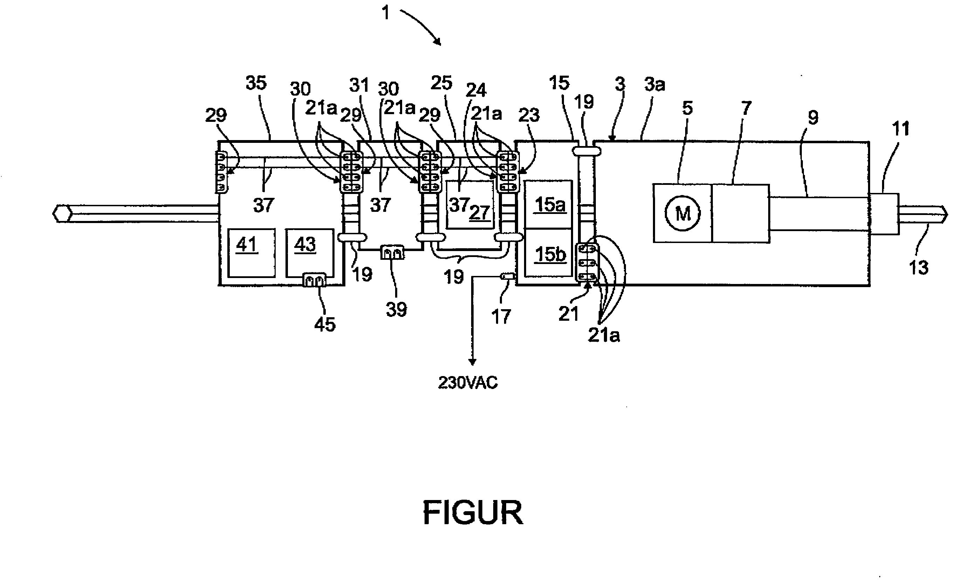

Anhand einer Figur wird die erfindungsgemässe Antriebsvorrichtung näher beschrieben. Die Figur zeigt eine schematische Darstellung der Antriebsvorrichtung.

Die Antriebsvorrichtung 1 umfasst eine Motoreinheit - fortan auch Motormodul 3 genannt - und eine Steuervorrichtung. Das Motormodul 3 umfasst innerhalb eines Motorgehäuses 3a einen Elektromotor 5 und ein Getriebe oder allgemein ein Kraftübertragungsmittel 7 zum Übertragen der Antriebskraft des Elektromotors 5 auf eine Antriebswelle 9. Die Antriebswelle 9 kann - wie in der Figur dargestellt - mittels einer Motorkupplung 11 mit einer Abtriebswelle 13 der Store drehfest verbunden werden. Die Steuervorrichtung umfasst mindestens ein Antriebsmodul 15 mit einer Motorelektronik bzw. einer Speisung 15a und einer Ansteuerschaltung 15b zum Ansteuern des Elektromotors 5. Der Elektromotor 5 ist vorzugsweise ein Gleichspannungs- bzw. DC-Motor, der z.B. mit einer Kleinspannung bis zu 24 V angesteuert werden kann. Das Antriebsmodul 15 ist vorzugsweise zum Anschliessen an eine Stromversorgung mit z.B. 230VAC Netzspannung ausgebildet, und die Speisung 15a umfasst eine Transformatoreinrichtung zum Erzeugen einer oder mehrerer Kleinspannungen zum Ansteuern des Elektromotors 5 und gegebenenfalls zur Stromversorgung allfälliger weiterer Module. Das Antriebsmodul 15 kann zum Anschliessen an das Stromnetz je nach Ausführungsform Klemm- oder Steckverbinder oder Anschlusskabel mit oder ohne Anschlussstecker umfassen. In der Figur ist dafür symbolisch eine Netz-Schnittstelle 17 dargestellt. Alternativ könnte die Stromversorgung des Antriebsmoduls 15 auch mittels Batterien und/oder Solarzellen sichergestellt werden (nicht dargestellt).

Das Antriebsmodul 15 und das Motormodul 3 umfassen aufeinander abgestimmte, wieder lösbare mechanische Verbindungsmittel 19 und entsprechende elektrische Verbindungsmittel 21, die es ermöglichen, die beiden Module 3, 15 vorzugsweise formschlüssig mechanisch miteinander zu verbinden, wobei auch eine elektrische Verbindung zwischen der Ansteuerschaltung 15b und dem Elektromotor 5 hergestellt wird. Die mechanischen Verbindungsmittel 19 können z.B. am einen Modulgehäuse eine oder mehrere federnde Rastnasen und am andern Modulgehäuse damit korrespondierende Absätze umfassen (nicht dargestellt). Die elektrischen Verbindungsmittel 21 sind vorzugsweise standardisierte Steckverbindungen und umfassen miteinander korrespondierende Paare von Steckkontakten 21a. Zwischen dem Motormodul 3 und dem Antriebsmodul 15 sind mindestens zwei solcher Verbindungen mit Steckkontakten 21a vorgesehen. Das in der Figur dargestellte dritte Steckkontaktpaar 21a hat die Funktion einer Masse- oder Erde-Verbindung zwischen den Modulen. Allfällige Endschalter und/oder Sicherungselemente gegen Überlast können optional im Antriebsmodul 15 und/oder im Motormodul 3 vorgesehen sein. Ansonsten umfasst keines dieser Module 3, 15 weiterführende elektronische Steuermittel, welche zum Steuern von Storenfunktionen benötigt werden.

Zusätzlich zur Schnittstelle mit den elektrischen Verbindungsmitteln 21 zum Motormodul 3 umfasst das Antriebsmodul 15 eine primäre Steuerschnittstelle 23 mit mindestens zwei elektrischen Steckkontakten 21a. Die in der Figur dargestellte primäre Steuerschnittstelle 23 umfasst vier Kontakte 21a. Analog zur Verbindung mit dem Motormodul 3 kann ein Funktionsmodul 25 mit mechanischen Verbindungsmitteln 19 wieder lösbar mit dem Antriebsmodul 15 verbunden werden, wobei gleichzeitig auch die elektrischen Steckkontakte 21a der primären Steuerschnittstelle 23 des Antriebsmoduls 15 mit korrespondierenden Kontakten 21a einer sekundären Steuerschnittstelle 24 des Funktionsmoduls 25 verbunden werden. Selbstverständlich könnte das Funktionsmodul 25 auch an einer anderen Stelle angeordnet werden, wobei dann die elektrischen Verbindungsmittel 21 ein Verbindungskabel umfassen würden (nicht dargestellt).

Das Funktionsmodul 25 umfasst eine Steuerelektronik 27, welche zum Steuern bestimmter Storenfunktionen wie z.B. Langsamlauf, Schnelllauf, Bewegungsrichtung, Drehzahlregelung oder Positionserfassung verwendet wird und das Antriebsmodul 15 entsprechend ansteuert. Die Stromversorgung des Funktionsmoduls 25 erfolgt über zwei Kontakte 21a der sekundären Steuerschnittstelle 24. Die beiden weiteren Kontakte 21a der sekundären Steuerschnittstelle 24 sind als Ausgänge zum übermitteln von Steuergrössen an das angrenzende Antriebsmodul 15 konfiguriert. Allgemein können solche Kontakte 21a für eine unidirektionale oder bidirektionale Kommunikation zwischen zwei oder mehreren miteinander verbundenen Modulen ausgebildet sein. Aufgrund des modularen Aufbaus der Antriebsvorrichtung 1 können Funktionsmodule 25 mit unterschiedlichem Funktionsumfang auf einfache Weise gegeneinander ausgetauscht werden. Dies gilt sinngemäss für alle Module der Antriebsvorrichtung 1. Über eine primäre Erweiterungsschnittstelle 29 des Funktionsmodus 25 können optional ein oder mehrere Zusatzmodule wie z.B. ein Sensormodul 31 und/oder ein Kommunikationsmodul 35 angeschlossen werden. Diese Zusatzmodule 31, 35 umfassen je eine an eine primäre Erweiterungsschnittstelle 29 anschliessbare sekundäre Erweiterungsschnittstelle 30 und eine primäre Erweiterungsschnittstelle 29. Im Falle mehrerer Zusatzmodule 31, 35 können diese - wie in der Figur dargestellt - seriell zusammengeschlossen und direkt oder indirekt mit dem Funktionsmodul 25 verbunden werden. Benachbarte Module können dabei, wie bereits beschrieben, mittels wieder lösbarer mechanischer Verbindungen 19 aneinander fixiert werden.

Die primären Erweiterungsschnittstellen 29 können gleich ausgebildet sein wie die primäre Steuerschnittstelle 23. Alternativ können sich primäre Erweiterungsschnittstellen 29 auch von der primären Steuerschnittstelle unterscheiden, sodass nur Funktionsmodule 25, nicht jedoch Zusatzmodule 31, 35 direkt mit dem Antriebsmodul 15 verbunden werden können. Selbstverständlich könnte dies auch mittels geeigneter konstruktiver Massnahmen wie z.B. mittels Codierstiften und Aufnahmen für solche Codierstifte an den Modulgehäusen erreicht werden (nicht dargestellt).

Die Steuerschnittstellen 23, 24 und die Erweiterungsschnittstellen 29, 30 umfassen vorzugsweise je zwei Kontakte 21a für die Stromversorgung und je zwei Kontakte für die Kommunikation mit vorgelagerten und/oder nachgelagerten Modulen. Zumindest die Kontakte 21a für die Stromversorgung sind innerhalb des Funktionsmoduls 25 und der Zusatzmodule 31, 35 so miteinander verbunden, dass bei zusammengesteckten Modulen durchgehende Speiseleitungen 37 entstehen(in der Figur als gepunktete Linien dargestellt). Die Signal- oder Kommunikationsleitungen können wahlweise ebenfalls in dieser Art direkt durch die Module geschlauft sein. Alternativ können sie auch als Eingänge oder Ausgänge konfiguriert und innerhalb der einzelnen Module als Verbindungsleitungen zur jeweiligen Verarbeitungselektronik ausgebildet sein (nicht dargestellt). Die Signal- oder Kommunikationsleitungen können wahlweise zum Übermitteln analoger oder digitaler Steuersignale zwischen den Modulen genutzt werden. Grundsätzlich besteht auch die Möglichkeit, die Speiseleitungen 37 zusätzlich als Kommunikationsleitungen zu nutzen, wobei in diesem Fall die Steuersignale der Speisespannung aufmoduliert werden.

Das optionale Sensormodul 31 umfasst eine oder mehrere Sensorschnittstellen 39 zum lokalen Anschliessen von Sensoren wie z.B. eines Bewegungsdetektors und/oder eines Windsensors (nicht dargestellt). Die Messgrössen solcher Sensoren können bei Bedarf direkt im Sensormodul 31 verarbeitet werden. Das Sensormodul 31 gibt die gegebenenfalls aufbereiteten Messgrössen an das Funktionsmodul 25 weiter. Die Steuerelektronik 27 des Funktionsmoduls 25 wiederum berücksichtigt diese Eingangsgrössen bei der Berechnung oder Bereitstellung von Steuergrössen zum Ansteuern des Motormoduls 3.

Das optionale Kommunikationsmodul 35 umfasst wahlweise eine Funkeinheit 41 und/oder eine Kommunikationseinheit 43 mit einer Kommunikationsschnittstelle 45 zur Ankoppelung an ein Bussystem wie z.B. an einen Feldbus nach dem KNX-Standard bzw. dessen Vorgänger EIB (Europäischer Installationsbus). Das Kommunikationsmodul 35 ermöglicht somit die uni- oder bidirektionale Kommunikation mit z.B. einer übergeordneten Steuerung und die Weiteleitung von Steuerbefehlen an das Funktionsmodul 25.

## Patentansprüche

1. Elektrische Antriebsvorrichtung (1) für eine Store, umfassend einen Elektromotor (5) zum Bewegen eines Behangs und eine steuervorrichtung zum Steuern dieses Elektromotors, wobei der Elektromotor (5) über ein Kraftübertragungsmittel (7) mit einer Antriebswelle (9) zum Antreiben einer Abtriebswelle (13) der Store gekoppelt ist, und wobei der Elektromotor (5) und das Kraftübertragungsmittel (7) als Motormodul (3) in einem gemeinsamen Motorengehäuse angeordnet sind, **dadurch gekennzeichnet, dass** die Steuervorrichtung ein Antriebsmodul (15) mit einer Speisung (15a) und einer Ansteuerschaltung (15b) zum Ansteuern des Elektromotors (5) umfasst, und dass dieses Antriebsmodul (15) elektrisch und mechanisch wieder lösbar direkt mit dem Motormodul (3) verbindbar ist.

2. Elektrische Antriebsvorrichtung (1) nach Anspruch 1, **dadurch gekennzeichnet, dass** am Antriebsmodul (15) eine primäre Steuerschnittstelle (23) zum Anschliessen eines Funktionsmoduls (25) ausgebildet ist, und dass das Funktionsmodul (25) eine Steuerelektronik (27) zum Steuern von Storenfunktionen umfasst.

3. Elektrische Antriebsvorrichtung (1) nach Anspruch 2, **dadurch gekennzeichnet, dass** das Funktionsmodul (25) und das Antriebsmodul (15) elektrisch und mechanisch wieder lösbar direkt miteinander verbindbar sind.

4. Elektrische Antriebsvorrichtung (1) nach einem der Ansprüche 2 oder 3, **dadurch gekennzeichnet, dass** das Funktionsmodul (25) eine sekundäre Steuerschnittstelle (24) zum Anschliessen an die primäre Steuerschnittstelle (23) des Antriebsmoduls (15) und eine primäre Erweiterungsschnittstelle (29) zum Anschliessen eines Zusatzmoduls umfasst.

5. Elektrische Antriebsvorrichtung (1) nach Anspruch 4, **dadurch gekennzeichnet, dass** das Zusatzmodul ein Kommunikationsmodul (35) oder ein Sensormodul (31) mit mindestens einer Sensorschnittstelle (39) zum lokalen Anschliessen eines Sensors ist, und dass das Zusatzmodul eine mit der primären Erweiterungsschnittstelle (29) korrespondierende sekundäre Erweiterungsschnittstelle (30) umfasst und elektrisch und mechanisch wieder lösbar mit dem Funktionsmodul (25) verbindbar ist.

6. Elektrische Antriebsvorrichtung (1) nach Anspruch 5, wobei das Zusatzmodul ein Kommunikationsmodul (35) ist, **dadurch gekennzeichnet, dass** dieses Kommunikationsmodul (35) eine Funkeinheit (41) und/oder eine Kommunikationseinheit (43) mit einer Kommunikationsschnittstelle (45) zum Ankoppeln an ein Bussystem umfasst.

7. Elektrische Antriebsvorrichtung (1) nach einem der Ansprüche 5 oder 6, **dadurch gekennzeichnet, dass** das Zusatzmodul nebst der sekundären Erweiterungsschnittstelle (29) eine primäre Erweiterungsschnittstelle (30) zum Anschliessen eines weiteren Zusatzmoduls umfasst, und dass Zusatzmodule elektrisch und mechanisch wieder lösbar miteinander verbindbar sind.

8. Elektrische Antriebsvorrichtung (1) nach einem der Ansprüche 1 bis 7, **dadurch gekennzeichnet, dass** die Stromversorgung der direkt oder indirekt mit dem Antriebsmodul (15) verbundenen weiteren Module durch die Speisung (15a) des Antriebsmoduls (15) erfolgt.

9. Elektrische Antriebsvorrichtung (1) nach einem der Ansprüche 1 bis 8, **dadurch gekennzeichnet, dass** das Motormodul (3) und die mit dem Motormodul (3) verbundenen Module der Steuervorrichtung so ausgebildet sind, dass eine beidseitige Ankopplung der Abtriebswelle (13) einer Store an die Antriebswelle (9) des Motormoduls (3) möglich ist.
